# EUROPEAN PATENT SPECIFICATION

(11) **EP 1 304 894 B1**
(45) Date of publication and mention of the grant of the patent: **16.08.2006**
(21) Application number: 02023490.2
(22) Date of filing: 21.10.2002
(51) Int. Cl.: H04Q 7/32

(54) **Data transfer to a mobile station through a mobile communication system**
Datenübertragung an eine Mobilstation durch ein Mobilkommunikationssystem
Transmission de données vers un station mobile par voie d'un système de communication mobile

(30) Priority: 22.10.2001 JP 2001324084; 09.10.2002 JP 2002296534
(43) Date of publication of application: 23.04.2003
(73) Proprietor: NTT DoCoMo, Inc., Tokyo 100-6150 (JP)
(72) Inventor: Tsutsumi, Noriyuki, c/o Intel. Prop. Dept., 2-chome, Chiyoda-ku, Tokyo 100-6150 (JP); Kato, Hidenari, c/o Intel. Prop. Dept., 2-chome, Chiyoda-ku, Tokyo 100-6150 (JP); Takeshita, Hisashi, c/o Intel. Prop. Dept., 2-chome, Chiyoda-ku, Tokyo 100-6150 (JP); Ito, Shogo, c/o Intel. Prop. Dept., 2-chome, Chiyoda-ku, Tokyo 100-6150 (JP)
(74) Representative: GROSSE BOCKHORNI SCHUMACHER

(56) References cited:
- EP-A- 0 843 449
- EP-A1- 1 139 631
- US-A- 5 915 225
- 3GPP: "3GPP TS 23.228 V5.1.0" , 3GPP TS 23.228 V5.1.0, XX, XX, PAGE(S) 1-135 XP002213956 * page 9, paragraph 4 - page 24, paragraph 4.7 * * page 38, paragraph 5.4.6 - page 41, paragraph 5.4.7 * * page 98 - page 99 * * page 111, paragraph B.1.1 - page 112, paragraph B.1.1 * * page 123, paragraph B.4 - page 126, paragraph B.4 *
- "Digital cellular telecommunications system;(Phase 2+) (GSM); Universal Mobile Telecommunications System (UMTS); General Packet Radio Service (GPRS); Service description; Stage 2 (3GPP TS 23.060 version 3.6.0 Release 1999)" , ETSI TS 123 060 V3.6.0, XX, XX, PAGE(S) 1-184 XP002198494 * page 4, paragraph 4 * * page 18, paragraph 5.2.1 * * page 20, paragraph 5.3.28 * * page 116, paragraph 9.2.2.2 - page 117, paragraph 9.2.2.2.1 *
- POSTEL J ET AL: "RFC 959 - FTP - File Transfer Protocol" XP002144723 Retrieved from the Internet: <URL: http://www.w3.org/Protocols/rfc959/> * the whole document *

## Description

### BACKGROUND OF THE INVENTION

### Field of the Invention

The present invention relates to a mobile communications terminal, network device, mobile communications system, information transmitting and receiving method and information transmitting and receiving program.

### Related Background Art

As mobile communications terminals such as cellular telephones, PHS and the like have become more popular, the users of such mobile communications terminals have become able to receive various types of information regardless of time or place. Specifically, by accessing server devices installed by mobile communications business operators (or server devices connected to mobile communications networks; same below), the users of mobile communications terminals can receive information such as images, music, text and the like stored in such server devices. For example, such techniques are described in "Japanese Patent Application Laid-Open No. 6-161918", "Japanese Patent Application Laid-Open No. 9-214935", "Japanese Patent Application Laid-Open No. 10-149309", "Japanese Patent Application Laid-Open No. 2001-313913" and the like in the Japanese Patent Application Laid-Open Gazette.

The document "IP Multimedia Subsystem (IMS); Stage 2 (3GPP TS 23.228 V5.1.0)" discloses a mobile communication terminal which performs a transmission request for the transmission of information from another mobile communication terminal.

Document EP 0 843 449 discloses an encryption secured computer system including a server. Particularly, the document describes an IP based application for file downloading which includes presenting means.

### SUMMARY OF THE INVENTION

With the current active development of information flow, the clear distinction between senders of information and receivers of information has disappeared, so that anyone may be a receiver of-information, and may also be a sender of information. For example, in cases where a user who receives information via the internet wishes to send information himself, this user can send his own information to a wide circle of other users by uploading this information into a server device managed by an internet connection business operator or the like. Meanwhile, other users can receive the information sent by the abovementioned user by accessing the server device managed by the abovementioned internet connection business operator and downloading this information.

However, in view of such points, the following problems have been encountered in the abovementioned conventional technology. Specifically, in cases where the users of mobile communications terminals desire to send information, these users must upload this information into a server device provided by a mobile communications business operator, so that the procedure involved is extremely complicated.

Furthermore, in cases where users of mobile communications terminals desire to receive information, the information that can be received is limited to information that has been uploaded into a server device provided by a mobile communications business operator. Accordingly, even if other users of mobile communications terminals have extremely useful information, this information cannot be received by requests from receivers unless the information is uploaded into a server device provided by a mobile communications business operator (self-initiated transmission from senders is possible).

Thus, the abovementioned conventional technology does not offer a high level of convenience in cases where users of mobile communications terminals send or receive information.

Accordingly, it is an object of the present invention to provide a mobile communications terminal, network device, mobile communications system, information transmitting and receiving method and information transmitting and receiving program which solve the abovementioned problems, and which make it possible to afford increased convenience when the users of mobile communications terminals send or receive information.

The abovementioned problems are solved by providing a mobile communications terminal according to claim 1 and a method according to claim 9, a system according to claim 8 and a program according to claim 10.

Since the mobile communications terminal receives transmission requests for information and transmits information stored in the storage means to communications terminals in accordance with the transmission requests for this information, this information can be sent from the mobile communications terminal to other communications terminals without uploading the information into a server device provided by a mobile communications business operator. As a result, increased convenience is afforded when the user of the mobile communications terminal sends information.

Since transmission requests for information stored in the storage means of other mobile communications terminals are transmitted to these other mobile communications terminals, and information transmitted from the other mobile communications terminals is received and presented in accordance with the transmission requests for this information, this information can be received from other mobile communications terminals without uploading the information into a server device provided by a mobile communications business operator. As a result, increased convenience can be afforded when the user of the mobile communications terminal receives information.

Since transmission requests for information stored in the storage means of a mobile communications terminal are received from communications terminals and transmitted to the mobile communications terminal, and information transmitted from the mobile communications terminal in accordance with the transmission requests for information is received and transmitted to the communications terminals, this information can be sent to the communications terminals from the mobile communications terminal without passing through a sever device provided by a mobile communications business operator. As a result, increased convenience can be afforded when the user of the mobile communications terminal sends or receives information.

By constructing a mobile communications system equipped with one of the abovementioned network devices, one of the abovementioned mobile communications terminals (on the transmitting side) and other communications terminals, it is possible to send information from the mobile communications terminal to the other communications terminals without using the intermediaryship of a server device provided by a mobile communications business operator. As a result, increased convenience can be afforded when the user of the mobile communications terminal sends or receives information.

### BRIEF DESCRIPTION OF THE DRAWINGS

Fig. 1 is a structural diagram of the mobile communications system;
Fig. 2 is a diagram which shows the directory construction of the storage part;
Fig. 3 is a structural diagram of the file titled "list of stored information";
Fig. 4 is a timing chart which shows the operation of the mobile communications system;
Fig. 5 is a diagram which shows the flow of information that takes place when a connection is made from the cellular telephone 14 to the cellular telephone 12;
Fig. 6 is a diagram which shows the flow of information when the list of information is sent from the cellular telephone 12 to the cellular telephone 14;
Fig. 7 is a diagram which shows the flow of information when information is transmitted from the cellular telephone 12 to the cellular telephone 14;
Fig. 8 is a diagram which shows an image of the list of stored information;
Fig. 9 is a diagram which shows the flow of information when a connection is made with the cellular telephone 12 from the personal computer 46;
Fig. 10 is a diagram which shows the flow of information when the list of information is transmitted to the personal computer 46 from the cellular telephone 12; and
Fig. 11 is a diagram which shows the flow of information when information is transmitted from the cellular telephone 12 to the personal computer 46.

### DESCRIPTION OF THE PREFERRED EMBODIMENTS

First, a mobile communications system constituting an embodiment of the present invention will be described with reference to the attached figures. Furthermore, the mobile communications system of the present embodiment includes a network device and mobile communications terminal constituting embodiments of the present invention.

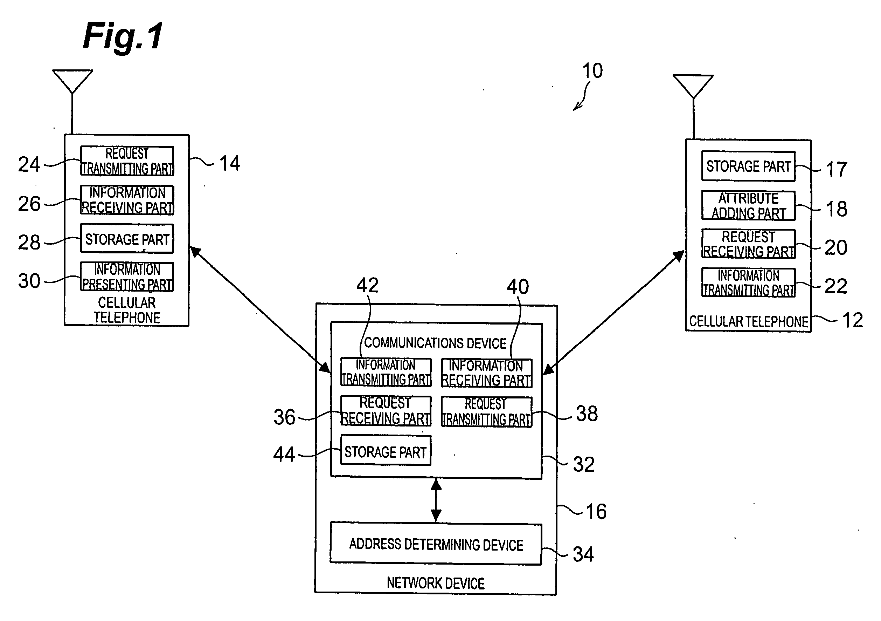

First, the construction of the mobile communications system of the present embodiment will be described. Fig. 1 is a structural diagram of the mobile communications system of the present embodiment. The mobile communications system 10 of the present embodiment is constructed so that this system is equipped with cellular telephones 12 and 14 (mobile communications terminals) and a network device 16. Furthermore, for convenience, the cellular telephone 12 will be described as the cellular telephone on the information transmitting side, and the cellular telephone 14 will be described as the cellular telephone on the information receiving side. However, there may also be cases in which the cellular telephone 12 is the cellular telephone on the information receiving side, and conversely, there may be cases in which the cellular telephone 14 is the cellular telephone on the information transmitting side. The respective constituent elements will be described in detail below.

The cellular telephone 12 is constructed so that this cellular telephone is equipped with a storage part 17 (first storage means), an attribute adding part 18 (adding means), a request receiving part 20 (first receiving means) and an information transmitting part 22 (first transmitting means).

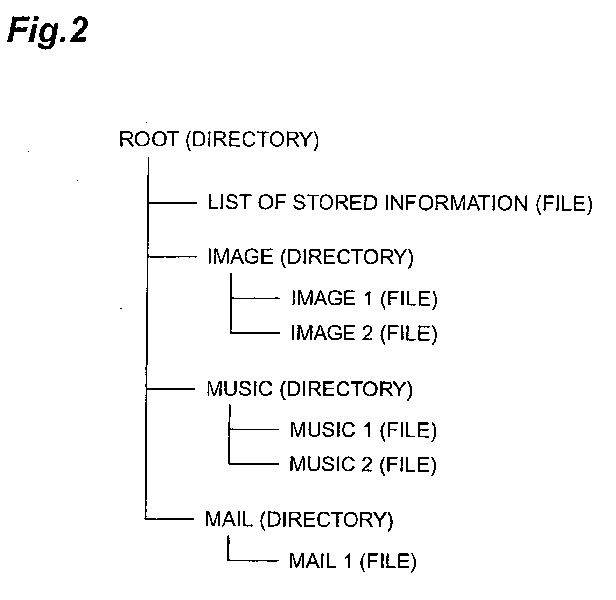

Information of various types such as images, music, text and the like is stored as files in the storage part 17. Furthermore, the storage part 17 can create directories based on instructions from the user. Fig. 2 is a diagram which shows the directory construction of the storage part 17. For example, as is shown in Fig. 2, subordinate directories titled "images", "music" and "mail" have been created by the user of the cellular telephone 12 under a root directory provided beforehand in the storage part 17. Furthermore, the image information of "image 1" and "image 2" is stored as image files (e. g., JPEG, GIF, BMP or MPEG files) in the "image" directory, and the music information of "music 1" and "music 2" is stored as music files (e. g., MIDI or WAV files) in the "music" directory. Furthermore, the text information of "mail 1" is stored as a text file in the "mail" directory. Moreover, the directory construction of the storage part 17 can be freely altered by the user of the cellular telephone 12. For example, a "still image" directory and a "moving image" directory can be further created under the "image" directory shown in Fig. 2, so that a hierarchical directory structure can be constructed.

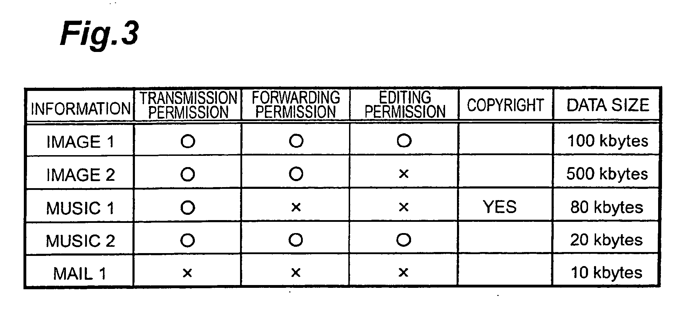

Furthermore, a file titled "list of stored information" is stored in the root directory. Figure 3 is a diagram which shows the construction of the file titled "list of stored information". As is shown in Fig. 3, a list of the information (files) stored in the storage part 17, and attribute information such as transmission permission information, forwarding permission information, editing permission information, copyright information, data size and the like, for the respective information (files) stored in the storage part 17, are contained in the file titled "list of stored information".

Here, the term "transmission permission information" refers to information that indicates whether or not it is permitted to transmit the information in question to other cellular telephones (e. g., the cellular telephone 14), i. e., whether or not it is permitted to disclose the information in question to other parties. Furthermore, the term "forwarding permission information" refers to information that indicates whether or not information that has been transmitted to other cellular telephones (e. g., the cellular telephone 14) may be further forwarded from these other cellular telephones to still other cellular telephones (e. g., cellular telephones other than the cellular telephone 14), i. e., whether or not this information may be secondarily distributed. Furthermore, the term "editing permission information" refers to information that indicates whether or not information that has been transmitted to other cellular telephones (e. g., the cellular telephone 14) may be edited in these other cellular telephones. Moreover, the term "copyright information" refers to information that indicates whether or not the information in question is copyrighted.

The attribute adding part 18 adds attribute information regarding attributes of information such as images, music, text and the like stored in the storage part 17 to this stored information. To describe this in greater detail, the attribute adding part 18 adds transmission permission information, forwarding permission information, editing permission information and copyright information to the respective information (files) such as images, music, text and the like stored in the storage part 17, and records such attribution in the file titled "list of stored information". Furthermore, the attribute adding part 18 detects the data size of respective information (files) such as images, music, text and the like stored in the storage part 17, and records this data size in the file titled "list of stored information".

The request receiving part 20 receives transmission requests that are transmitted from the cellular telephone 14 via the network device 16 for the list of information that is stored in the storage part 17 of the cellular telephone containing this request receiving part 20 (i. e., the cellular telephone 12). The request receiving part 20 also receives transmission requests that are transmitted from the cellular telephone 14 via the network device 16 for information stored in the storage part 17 of the cellular telephone containing this request receiving part 20 (i. e., the cellular telephone 12).

The information transmitting part 22 transmits the list of information stored in the storage part 17 of the cellular telephone containing this information transmitting part 22 (i. e., the cellular telephone 12) to the cellular telephone 14 via the network device 16 in accordance with transmission requests for the list of information that are received by the request receiving part 20. Furthermore, the information transmitting part 22 transmits information stored in the storage part 17 of the cellular telephone containing this information transmitting part 22 (i. e., the cellular telephone 12) to the cellular telephone 14 via the network device 16 in accordance with transmission requests for information that are received by the request receiving part 20.

In this case, the information transmitting part 22 refers to transmission permission information that is contained in the file titled "list of stored information" that is stored in the storage part 17, and in cases where the transmission of the information requested by the cellular telephone 14 is permitted, the information transmitting part 22 transmits this information to the cellular telephone 14. On the other hand, in cases where the transmission of this information is not permitted, the information transmitting part 22 does not transmit this information to the cellular telephone 14.

Furthermore, the information transmitting part 22 refers to forwarding permission information contained in the file titled "list of stored information" that is stored in the storage part 17, and in cases where forwarding of the information requested by the cellular telephone 14 is permitted, the information transmitting part 22 transmits this information to the cellular telephone 14 in a state of allowing the forwarding of the information. On the other hand, in cases where forwarding of this information is not permitted, the information transmitting part 22 transmits this information to the cellular telephone 14 after working the information into a state that does not allow forwarding.

Furthermore, the information transmitting part 22 refers to editing permission information contained in the file titled "list of stored information" that is stored in the storage part 17, and in cases where editing of the information requested by the cellular telephone 14 is permitted in the cellular telephone 14, the information transmitting part 22 transmits this information to the cellular telephone 14 in a state of allowing the editing of the information. On the other hand, in cases where editing of the information is not permitted in the cellular telephone 14, the information transmitting part 22 transmits this information to the cellular telephone 14 after working the information into a state that does not allow editing of the information.

Furthermore, the information transmitting part 22 refers to copyright information contained in the file titled "list of stored information" that is stored in the storage part 17, and if the information requested by the cellular telephone 14 is copyrighted, the information transmitting part 22 transmits information indicating this to the cellular telephone 14.

Here, the cellular telephone 12 can perform communications while moving. Specifically, the cellular telephone 12 can transmit the abovementioned information to the cellular telephone 14 while moving. However, in cases where the cellular telephone 12 transmits the abovementioned information while moving, there may be instances in which the cellular telephone 12 enters a region in which the reception electromagnetic wave strength is small, so that the call is cut off before the transmission of the abovementioned information is completed. The cellular telephone 12 is prepared for such cases. That is, specifically, whenever the call to the cellular telephone 14 is cut off in a state in which the transmission of the abovementioned information to the cellular telephone 14 is incomplete, the information transmitting part 22 again makes a call connection when the cellular telephone 12 returns to a region in which the reception electromagnetic wave strength is large, and re-initiates the transmission of the abovementioned information to the cellular telephone 14.

The attribute adding part 18, request receiving part 20 and information transmitting part 22 of the cellular telephone 12 are realized by installing a program (information transmitting and receiving program) in the cellular telephone 12 in order to realize the respective functions of the abovementioned attribute adding part 18, request receiving part 20 and information transmitting part 22 in the cellular telephone 12. This program may be installed in the cellular telephone 12 beforehand, or may be downloaded from a server via a carrier wave, and then installed.

The cellular telephone 14 is constructed so that this cellular telephone is equipped with a request transmitting part 24 (second transmitting means), an information receiving part 26 (second receiving means), a storage part 28 (second storage means) and an information presenting part 30 (presenting means).

The request transmitting part 24 transmits transmission requests for the list of information stored in the storage part 17 of the cellular telephone 12 to the cellular telephone 12 via the network device 16. The request transmitting part 24 also transmits transmission requests for information stored in the storage part 17 of the cellular telephone 12 to the cellular telephone 12 via the network device 16.

The information receiving part 26 receives the abovementioned list of information that is transmitted from the cellular telephone 12 via the network device 16 in accordance with the transmission requests for the abovementioned list of information. The information receiving part 26 also receives the abovementioned information that is transmitted from the cellular telephone 12 via the network device 16 in accordance with the transmission requests for the abovementioned information.

The abovementioned list of information and the abovementioned information received by the information receiving part 26 are stored in the storage part 28. Here, furthermore, like the storage part 17 of the cellular telephone 12, the storage part 28 can also create directories based on instructions from the user.

The information presenting part 30 presents the abovementioned list of information and the abovementioned information received by the information receiving part 26. In more concrete terms, the information presenting part 30 displays the abovementioned list of information on the display of the cellular telephone 14. Furthermore, if the abovementioned information consists of images or text, the information presenting part 30 displays this information on the display, and if the abovementioned information consists of music, the information presenting part 30 plays back this information and outputs the information from the speaker.

The request transmitting part 24, information receiving part 26 and information presenting part 30 of the cellular telephone 14 are realized by installing a program (information transmitting and receiving program) in the cellular telephone 14 in order to realize the respective functions of the abovementioned request transmitting part 24, information receiving part 26 and image presenting part 30 in the cellular telephone 14. This program may be installed beforehand in the cellular telephone 14, or may be downloaded from a server via a carrier wave, and then installed.

The network device 16 is constructed so that this device is equipped with a communications device 32 and an address determining device 34 (specifying means). Furthermore, the communications device 32 is constructed so that this device is equipped with a request receiving part 36 (third receiving means), request transmitting part 38 (third transmitting means), information receiving part 40 (fourth receiving means), information transmitting part 42 (fourth transmitting means) and storage part 44 (third storage means).

The request receiving part 36 of the communications device 32 receives transmission requests that are transmitted from the cellular telephone 14 to the cellular telephone 12 for the list of information that is stored in the storage part 17 of the cellular telephone 12. The request receiving part 36 also receives transmission requests that are transmitted from the cellular telephone 14 to the cellular telephone 12 for information that is stored in the storage part 17 of the cellular telephone 12.

The address determining device 34 specifies the cellular telephone 12 to which transmission requests for the abovementioned list of information and transmission requests for information received by the request receiving part 36 of the communications device 32 are to be transmitted on the basis of these transmission requests for the abovementioned list of information and transmission requests for information, and notifies the request transmitting part 38 of the communications device 32 of the results. In more concrete terms, the address determining device 34 extracts information (e. g., telephone number or machine number of the cellular telephone) that specifies the destination cellular telephone from the transmission requests for the list of information and transmission requests for information, and specifies the destination cellular telephone on the basis of this information.

The request transmitting part 38 of the communications device 32 transmits transmission requests for the abovementioned list of information and transmission requests for the abovementioned information to the cellular telephone 12 specified by the address determining device 34. Here, in cases where the cellular telephone 12 has moved outside the mobile communications area or the power supply has been switched off, so that transmission requests for the abovementioned list of information or transmission requests for the abovementioned information cannot be transmitted to the cellular telephone 12, the request transmitting part 38 stores the transmission requests for the abovementioned list of information and transmission requests for the abovementioned information in the storage part 44. Then, when the cellular telephone 12 returns to the mobile communications area or the power supply is switched on, so that the transmission requests for the abovementioned list of information or transmission requests for the abovementioned information can be transmitted to the cellular telephone 12, the transmission requests for the abovementioned list of information or transmission requests for the abovementioned information are read out from the storage part 44 and transmitted to the cellular telephone 12. Furthermore, the fact that the cellular telephone 12 has returned to the mobile communications area, or the fact that the power supply has been switched on, can be detected by means of a position registration request that is transmitted from the cellular telephone 12.

The information receiving part 40 of the communications device 32 receives the list of the abovementioned information and the abovementioned information transmitted from the cellular telephone 12 in accordance with the transmission requests for the abovementioned list of information and the transmission requests for the abovementioned information that are transmitted by the request transmitting part 38.

The information transmitting part 42 of the communications device 32 transmits the list of the abovementioned information and the abovementioned information received by the information receiving part 40 to the cellular telephone 14 which is the originator of the requests.

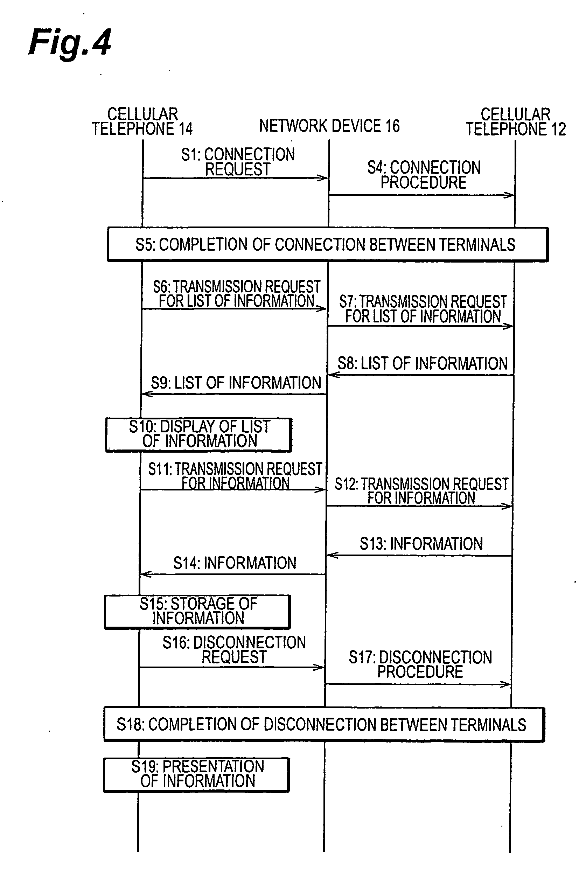

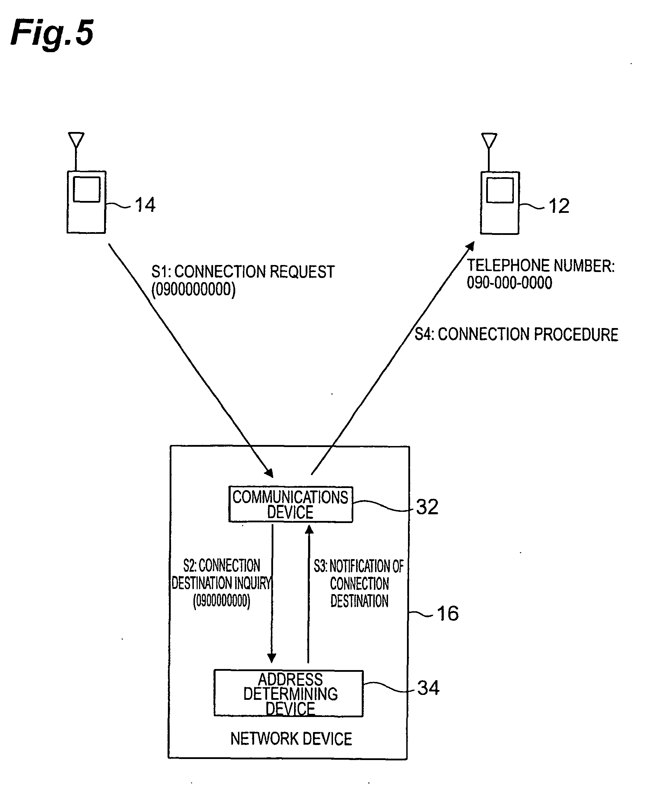

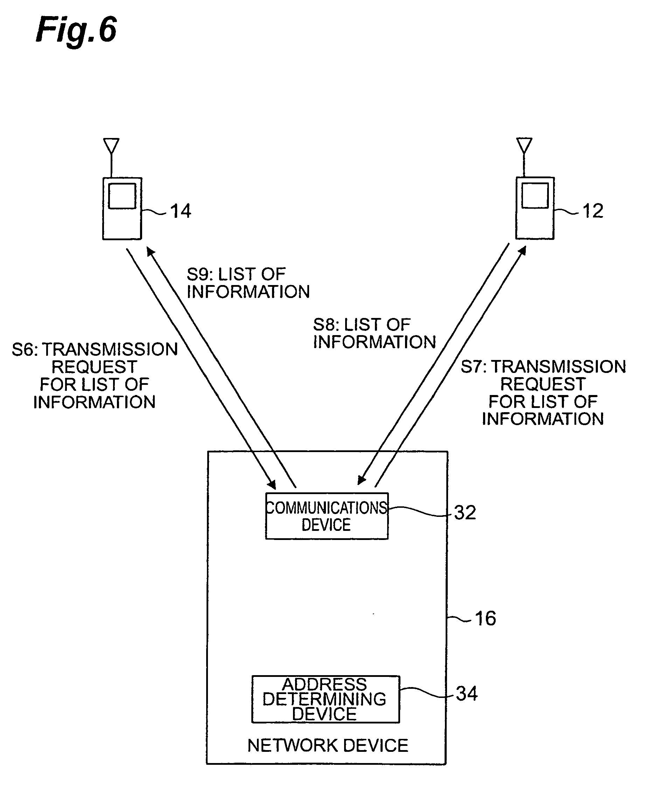

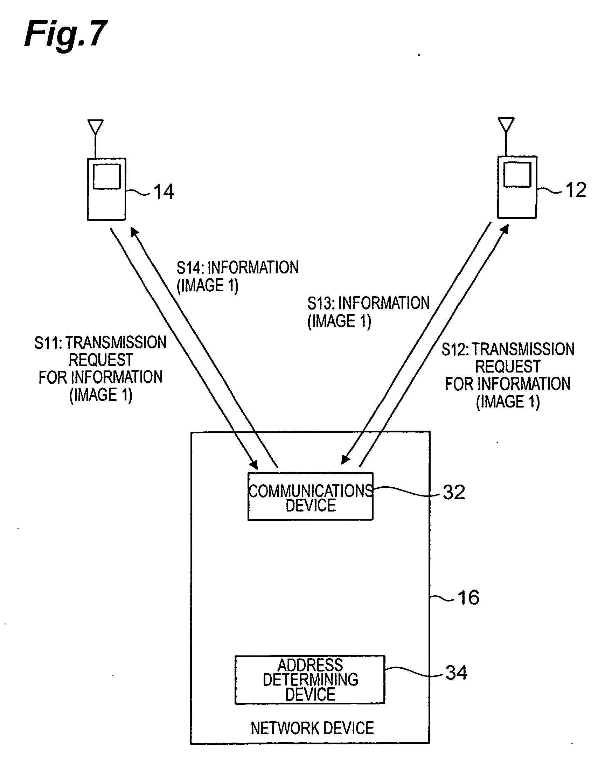

Next, the operation of the mobile communications system of the present embodiment will be described, and an information transmitting and receiving method constituting an embodiment of the present invention will also be described. Fig. 4 is a timing chart which illustrates the operation of the mobile communications system 10 of the present embodiment, and Fig. 5 is a diagram which shows the flow of information that takes place when a connection is made from the cellular telephone 14 to the cellular telephone 12. Fig. 6 is a diagram which shows the flow of information that takes place when the list of information is transmitted from the cellular telephone 12 to the cellular telephone 14, and Fig. 7 is a diagram which shows the flow of information that takes place when information is transmitted from the cellular telephone 12 to the cellular telephone 14.

First, the cellular telephone 14 is connected to the cellular telephone 12 in order to allow the cellular telephone 14 to receive information stored in the storage part 17 of the cellular telephone 12. In this case, as is shown in Figs. 4 and 5, a request for connection to the cellular telephone 12 is first transmitted from the cellular telephone 14 to the network device 16 (S1). As is shown in Fig. 5, this connection request contains the telephone number "090000000" of the cellular telephone 12 as information that specifies the destination cellular telephone 12.

When the abovementioned connection request is received by the communications device 32 of the network device 16, an inquiry regarding the connection destination is sent to the address determining device 34 from the communications device 32 as shown in Fig. 5 (S2).

When this inquiry regarding the connection destination is made, the cellular telephone 12 that is the connection destination is specified by the address determining device 34 on the basis of the telephone number of the cellular telephone 12 that is contained in the abovementioned transmission request, and the communications device 32 is notified of the result (S3).

When the cellular telephone 12 that is the connection destination is specified, as shown in Figs. 4 and 5, a connection procedure that includes the transmission of the connection request from the cellular telephone 14, setting of a wireless link and the like is performed by the communications device 32 of the network device 16 for the cellular telephone 12 (S4), and when this connection procedure is completed, a connection is completed between the cellular telephone 12 and cellular telephone 14 (S5).

Following the completion of this connection, in cases where the cellular telephone 14 is to receive a list of the information stored in the storage part 17 of the cellular telephone 12, a transmission request for the list of information is first transmitted from the cellular telephone 14 to the communications device 32 of the network device 16 as shown in Figs. 4 and 6 (S6). The transmission request for the list of information that is received by the communications device 32 of the network device 16 is transmitted from the communications device 32 of the network device 16 to the cellular telephone 12, and is received by the cellular telephone 12 (S7).

In this case, if the cellular telephone 12 has moved outside of the mobile communications area, or if the power supply has been switched off, so that the request for the abovementioned list of information cannot be transmitted to the cellular telephone 12, the transmission request for the abovementioned list of information is temporarily stored in the storage part 44. Afterward, when the cellular telephone 12 returns to the mobile communications area or the power supply is switched on so that the transmission request for the abovementioned list of information can be transmitted to the cellular telephone 12, the transmission request for the abovementioned list of information is read out from the storage part 44 and transmitted to the cellular telephone 12. Furthermore, in this case, it would also be possible to arrange the system so that the abovementioned control option is selected by the cellular telephone 14 on the transmission request side. Specifically, it would also be possible to arrange the system so that in cases where the cellular telephone 12 has moved outside of the mobile communications area or the power supply has been switched off, the option of interrupting the transmission of the transmission request for the list of information, or transmitting the transmission request for the abovementioned list of information to the cellular telephone 12 when the cellular telephone 12 has returned to the mobile communications area or the power supply has been switched on, is selected on the side of the cellular telephone 14. Similarly, the system may also be arranged so that the abovementioned control option is selected by instructions from the cellular telephone 12 on the information transmitting side. Specifically, the system may also be arranged so that in cases where the cellular telephone 12 has moved outside of the mobile communications area, or the power supply has been switched off, the option of interrupting the transmission of the abovementioned list of information, or transmitting the information to the cellular telephone 14 when the cellular telephone 12 has returned to the mobile communications area or the power supply has been switched on, is selected on the side of the cellular telephone 12.

When a transmission request for the list of information is received by the cellular telephone 12, the list of information stored in the storage part 17 of the cellular telephone 12 is read out from the file titled "list of stored information" that is stored in the storage part 17, and is transmitted to the communications device 32 of the network device 16 (S8). In this case, the attribute information such as transmission permission information, forwarding permission information, editing permission information, copyright information, data size and the like that is contained in the file titled "list of stored information" is also included in the list of information and transmitted. The list of information that is received by the communications device 32 of the network device 16 is further transmitted from the communications device 32 of the network device 16 to the cellular telephone 14, and is received by the cellular telephone 14 (S9).

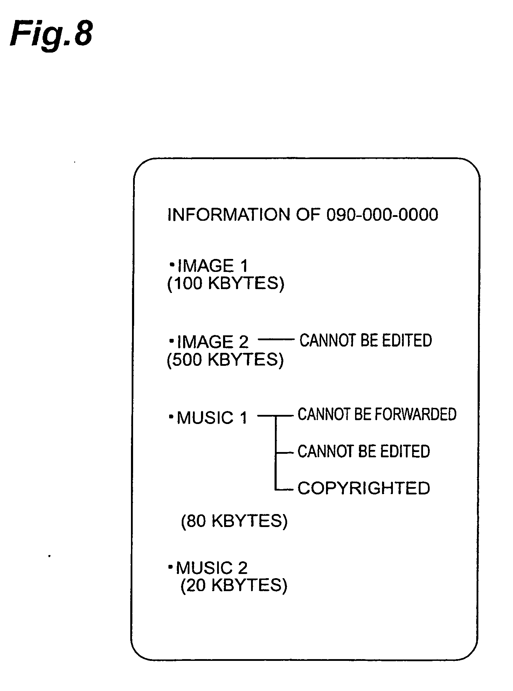

As is shown in Fig. 8, the abovementioned list of information received by the cellular telephone 14 is shown on the display of the cellular telephone 14 (S10). Specifically, the titles of the information "image 1", "image 2", "music 1" and "music 2" are displayed on the display of the cellular telephone 14 as the list of information stored in the storage part 17 of the cellular telephone 12, whose telephone number is "090-000-0000". In this case, attribute information such as forwarding permission information, editing permission information, copyright information, data size and the like is also displayed together with the respective information. Furthermore, information whose transmission from the cellular telephone 12 is not permitted ("mail 1" in the example shown in Fig. 3) is excluded from the list of information. Furthermore, the display configuration of the list of information is not limited to the display configuration shown in Fig. 8; for example, the information titles "image 1", "image 2", "music 1" and "music 2" may be displayed in different colors according to the attributes of the information. Moreover, it would also be possible to arrange the system so that information whose transmission is not permitted is also included in the list of information, and so that a display of "cannot be transmitted" is output when this information is designated.

In cases where the user of the cellular telephone 14 refers to the abovementioned list of information, and the cellular telephone 14 is to receive information that is stored in the storage part 17 of the cellular telephone 12, a transmission request for information is first transmitted from the cellular telephone 14 to the communications device 32 of the network device 16 as shown in Figs. 4 and 7 (S11). Information that specifies the desired information (e. g., the information title "image 1") is included in the transmission request for the information. The transmission request for this information that is received by the communications device 32 of the network device 16 is further transmitted from the communications device 32 of the network device 16 to the cellular telephone 12, and is received by the cellular telephone 12 (S12).

In this case, if the cellular telephone 12 has moved out of the mobile communications area, or if the power supply has been switched off, so that the transmission request for the abovementioned information cannot be transmitted to the cellular telephone 12, the transmission request for the abovementioned information is temporarily stored in the storage part 44. Subsequently, when the cellular telephone 12 returns to the mobile communications area or the power supply is switched on so that the transmission request for the abovementioned information can be transmitted to the cellular telephone 12, the transmission request for the abovementioned information is read out from the storage part 44 and transmitted to the cellular telephone 12. In this case, furthermore, it would also be possible to arrange the system so that the abovementioned control option can be selected by instructions from the cellular telephone 14 on the information request side. Specifically, it would also be possible to arrange the system so that in cases where the cellular telephone 12 has moved outside of the mobile communications area or the power supply has been switched off, the option of interrupting the transmission of the transmission request for the information, or transmitting the transmission request for the abovementioned information to the cellular telephone 12 when the cellular telephone 12 has returned to the mobile communications area or the power supply has been switched on, is selected on the side of the cellular telephone 14. Similarly, the system may also be arranged so that the abovementioned control option is selected by instructions from the cellular telephone 12 on the information transmitting side. Specifically, the system may also be arranged so that in cases where the cellular telephone 12 has moved outside of the mobile communications area, or the power supply has been switched off, the option of interrupting the transmission of the list of information, or transmitting the abovementioned information to the cellular telephone 14 when the cellular telephone 12 has returned to the mobile communications area or the power supply has been switched on, is selected on the side of the cellular telephone 12.

When a transmission request for information is received by the cellular telephone 12, the corresponding information (e. g., "image 1") that is stored in the storage part 17 of the cellular telephone 12 is read out, and is transmitted to the communications device 32 of the network device 16 (S13). In this case, reference is made to the forwarding permission information that is contained in the file titled "list of stored information" stored in the storage part 17, and if forwarding of the information in question is permitted, this information is transmitted in a state of allowing the forwarding. On the other hand, if forwarding of this information is not permitted, the information is worked into a state that does not allow forwarding, and is then transmitted. Furthermore, reference is made to the editing permission information contained in the file titled "list of stored information" that is stored in the storage part 17, and if editing of the information in question is permitted, this information is transmitted in a state of allowing the editing. On the other hand, if editing of this information is not permitted, the information is worked into a state that does not allow editing, and is then transmitted. Furthermore, reference is made to the copyright information contained in the file titled "list of stored information" that is stored in the storage part 17, and if the information is question is copyrighted, information that indicates this is also transmitted along with the information itself.

The information (e. g., "image 1") that is received by the communications device 32 of the network device 16 is further transmitted from the communications device 32 of the network device 16 to the cellular telephone 14, and is received by the cellular telephone 14 (S14). The information that is received by the cellular telephone 14 is temporarily stored in the storage part 28 of the cellular telephone 14 (S15).

Here, the cellular telephone 12 can perform communications while moving. Specifically, the cellular telephone 12 can transmit the abovementioned information to the cellular telephone 14 while moving. However, in cases where the cellular telephone 12 transmits the abovementioned information while moving, there may be instances in which the cellular telephone 12 enters a region in which the reception electromagnetic wave strength is small, so that the call is cut off before the transmission of the abovementioned information is completed. The cellular telephone 12 is prepared for such cases. That is, specifically, whenever the call to the cellular telephone 14 is cut off in a state in which the transmission of the abovementioned information to the cellular telephone 14 is incomplete, a call connection is again made by the information transmitting part 22 of the cellular telephone 12 at the point in time at which the cellular telephone 12 returns to a region in which the reception electromagnetic wave strength is large, and the transmission of the abovementioned information to the cellular telephone 14 is re-initiated.

When information received by the cellular telephone 14 is stored in the storage part 28, a disconnection request is transmitted from the cellular telephone 14 to the communications device 32 of the network device 16 (S16), and a disconnection procedure is performed by the communications device 32 of the network device 16 with respect to the cellular telephone 12 (S17), so that the connection between the cellular telephone 12 and cellular telephone 14 is severed (S18).

Furthermore, in the cellular telephone 14, information stored in the storage part 28 is presented by instructions from the user (S19). Specifically, if the abovementioned information consists of images or text, this information is displayed on the display, and if the abovementioned information consists of music, this information is played back and output from the speaker.

Next, the operation and effects of the mobile communications system of the present embodiment will be described. In the mobile communications system 10 of the present embodiment, the cellular telephone 12 receives transmission requests for information from the cellular telephone 14, and transmits information stored in the storage part 17 to the cellular telephone 14 in accordance with these transmission requests for information. Accordingly, the abovementioned information can be sent from one cellular telephone 12 to the other cellular telephone 14 without uploading this information into a server device provided by a mobile communications business operator. As a result, increased convenience can be afforded when the user of the cellular telephone sends information.

Furthermore, in the mobile communications system 10 of the present embodiment, the cellular telephone 14 transmits transmission requests for information stored in the storage part 17 of another cellular telephone 12 to this other cellular telephone 12, and receives and presents information that is transmitted from this other cellular telephone 12 in accordance with these transmission requests. Accordingly, the abovementioned information can be received from the other cellular telephone 12 without uploading this information into a server device provided by a mobile communications business operator. As a result, increased convenience can be afforded when the user of the cellular telephone receives information.

Furthermore, cellular telephone 12 can transmit the abovementioned information while moving. However, in cases where the cellular telephone 12 transmits the abovementioned information while moving, there may be instances in which the cellular telephone 12 enters a region in which the reception electromagnetic wave strength is small, so that the call is cut off before the transmission of the abovementioned information is completed. Here, the cellular telephone 12 of the present embodiment again makes a call connection and re-initiates the transmission of the abovementioned information to the abovementioned cellular telephone 14 at the point in time at which the cellular telephone 12 returns to a region in which the reception electromagnetic wave strength is large. As a result, the abovementioned information can be securely transmitted from the cellular telephone 12 to the cellular telephone 14.

Furthermore, in the cellular telephone 12 of the mobile communications system 10 of the present embodiment, attribute information for the abovementioned information stored in the storage part 17 is added to this stored information. Accordingly, for each information file stored in the storage part 17, various types of control such as allowing or not allowing transmission, allowing or not allowing editing and the like can be executed.

Furthermore, in the cellular telephone 12 of the mobile communications system 10 of the present embodiment, transmission permission information is added to the abovementioned information stored in the storage part 17. On the basis of this transmission permission information, the information is transmitted to the other cellular telephone 14 in cases where the transmission of this information is permitted, and the information is not transmitted to the other cellular telephone 14 in cases where the transmission of this information is not permitted. Accordingly, the user of the cellular telephone 12 can transmit only information that he desires to send to the other cellular telephone 14.

Furthermore, in the cellular telephone 12 of the mobile communications system 10 of the present embodiment, forwarding permission information is added to the abovementioned information stored in the storage part 17. On the basis of this forwarding permission information, information is sent to the cellular telephone 14 in a state of allowing the forwarding in cases where forwarding of this information is permitted. On the other hand, in cases where forwarding of this information is not permitted, the information is worked into a state that does not allow forwarding, and is then transmitted to the cellular telephone 14. Accordingly, in the case of information that the user of the cellular telephone 12 does not desire to be forwarded to other cellular telephones from the cellular telephone 14, the forwarding of this information to other cellular telephones can be prevented.

Furthermore, in the cellular telephone 12 of the mobile communications system 10 of the present embodiment, editing permission information is added to the abovementioned information stored in the storage part 17. On the basis of this editing permission information, information is sent to the cellular telephone 14 in a state of allowing the editing in cases where editing of this information is permitted. On the other hand, in cases where editing of this information is not permitted, the information is worked into a state that does not allow editing, and is then transmitted to the cellular telephone 14. Accordingly, in the case of information that the user of the cellular telephone 12 does not desire to be edited by other parties, editing of this information by other parties can be prevented.

Furthermore, in the cellular telephone 12 of the mobile communications system 10 of the present embodiment, copyright information is added to the abovementioned information stored in the storage part 17, and this copyright information is transmitted to the cellular telephone 14. Accordingly, the user of the cellular telephone 14 can ascertain any copyrighting of the information that is received.

Furthermore, in the cellular telephone 12 of the mobile communications system 10 of the present embodiment, a list of the abovementioned information stored in the storage part 17 of the cellular telephone 12 is transmitted to the cellular telephone 14. Accordingly, the user of the cellular telephone 14 can easily ascertain what kinds of information are stored in the storage part 17 of the cellular telephone 12, and can easily search for desired information.

Furthermore, in the cellular telephone 12 of the mobile communications system 10 of the present embodiment, directories of the storage part 17 can be created on the basis of instructions from the user. Accordingly, the user of the cellular telephone 12 can create directories in accordance with the types of information (e. g., images, music, text and the like) possessed by this user, and can store the information in an orderly manner.

Furthermore, considering the cellular telephone 14 of the mobile communications system 10 of the present embodiment, received information is stored in the storage part 28 in this cellular telephone 14. Accordingly, such received information can be presented not only at the time of reception, but also at a later time.

Furthermore, in the cellular telephone 14 of the mobile communications system 10 of the present embodiment, a list of information stored in the storage part 17 of the other cellular telephone 12 is received and presented. Accordingly, the user of the cellular telephone 14 can easily ascertain what kinds of information are stored in the storage part 17 of the other cellular telephone 12, and can easily search for desired information.

Furthermore, in the cellular telephone 14 of the mobile communications system 10 of the present embodiment, directories of the storage part 28 can be created on the basis of instructions from the user. Accordingly, the user of the cellular telephone 14 can create directories in accordance with the types of information (e. g., images, music, text and the like) possessed by this user, and can store the information in an orderly manner.

Furthermore, considering the network device 16 of the mobile communications system 10 of the present embodiment, in cases where transmission requests for the abovementioned list of information or transmission requests for information cannot be transmitted to the cellular telephone 12, such transmission requests for the list of information and transmission requests for information are stored in the storage part 44 in this network device 16, and then, when it becomes possible to transmit these transmission requests for the list of information or transmission requests for information to the cellular telephone 12, these transmission requests for the list of information or transmission requests for information are read out from the storage part 44 and transmitted to the cellular telephone 12. Accordingly, transmission requests for the list of information and transmission requests for information can be surely transmitted to the cellular telephone 12.

The mobile communications system 10 of the abovementioned embodiment was a system in which information was transmitted from a cellular telephone 12 to a cellular telephone 14, however, the cellular telephones 12 and 14 may also be other mobile communications terminals such as PHS or the like.

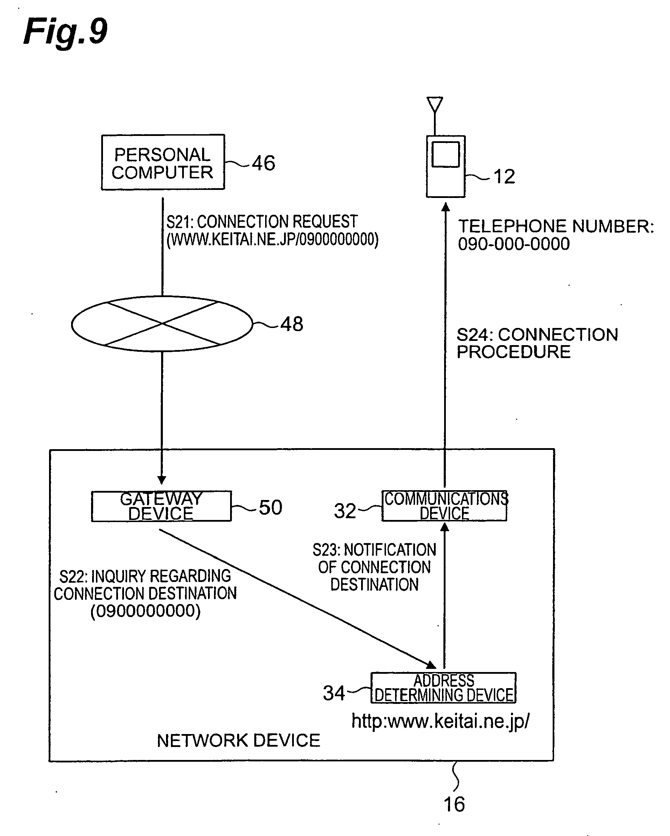

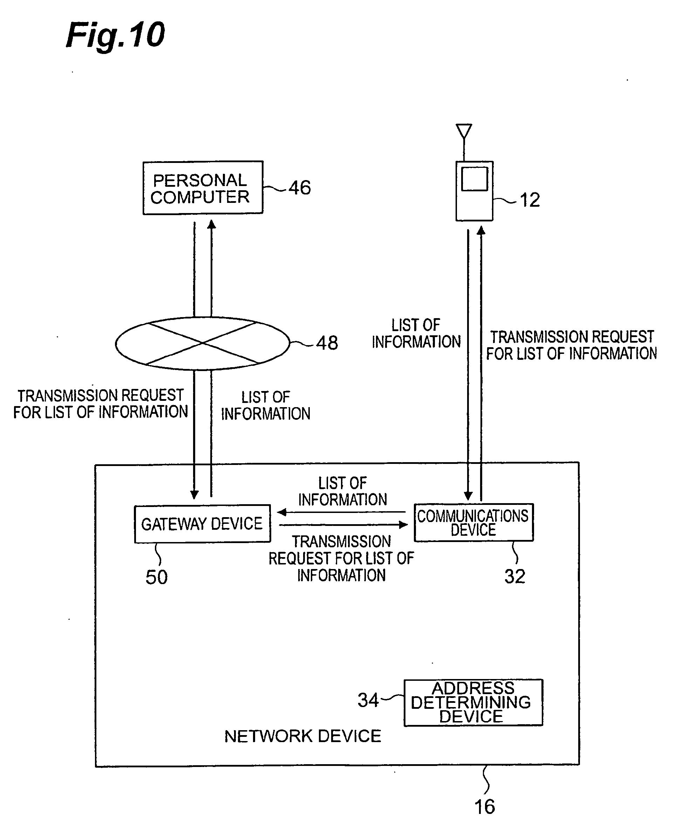

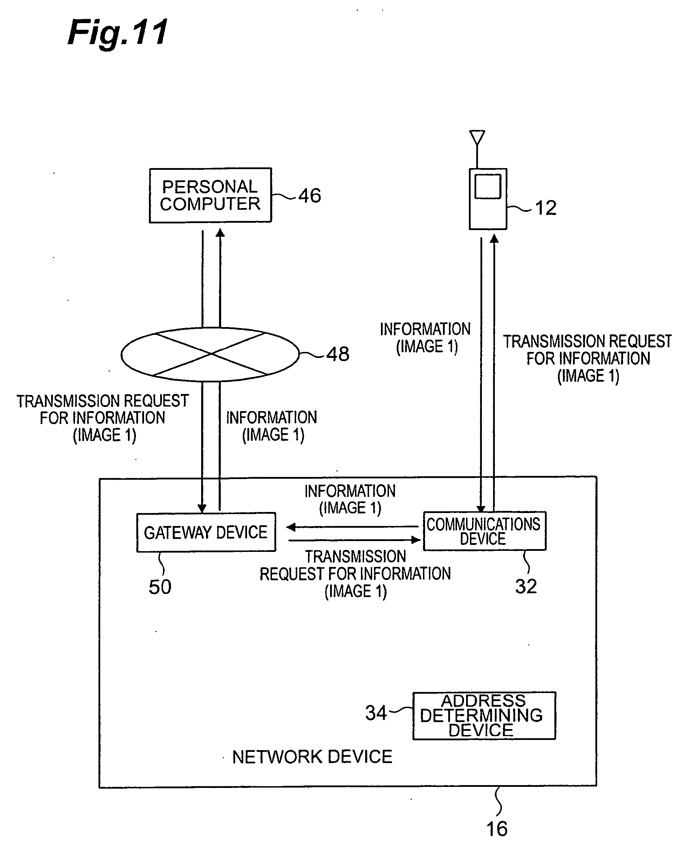

Furthermore, in the mobile communications system 10 of the abovementioned embodiment, the communications terminal on the side receiving information was a cellular telephone 14, however, this terminal may also be a communications terminal such as a personal computer or the like. Fig. 9 is a diagram which shows the flow of information that takes place when a connection is made from a personal computer 46 to the cellular telephone 12, and Fig. 10 is a diagram which shows the flow of information that takes place when the list of information is transmitted from the cellular telephone 12 to the personal computer 46. Fig. 11 is a diagram which shows the flow of information that takes place when information is transmitted from the cellular telephone 12 to the personal computer 46.

In order to allow the personal computer 46 to receive information stored in the storage part 17 of the cellular telephone 12, a connection is first made from the personal computer 46 to the cellular telephone 12. In this case, as is shown in Fig. 9, a request for connection to the cellular telephone 12 is first transmitted from the personal computer 46 to the network device 16 via the internet 48 (S21). This connection request includes information that specifies the IP address of the address determining device inside the network device 16 ("www.keitai.ne.jp/", which is the domain name of the address determining device), and information that specifies the destination cellular telephone 12 ("0900000000", which is the telephone number of the cellular telephone 12).

When the abovementioned connection request is received by the gateway device 50 of the network device 16, an inquiry regarding the connection destination is made to the address determining device 34 by the gateway device 50 on the basis of the domain name of the address determining device that is included in the abovementioned connection request (S22).

When an inquiry regarding the connection destination is made, the cellular telephone 12 that constitutes the connection destination is specified by the address determining device 34 on the basis of the telephone number of the cellular telephone 12 that is included in the abovementioned transmission request, and the communications device 32 is notified of the result (S23).

When the cellular telephone 12 constituting the connection destination is specified, a connection procedure that includes transmission of the connection request from the personal computer 46, setting of a wireless link and the like is performed by the communications device 32 of the network device 16 with respect to the cellular telephone 12 (S24), and when this connecting procedure is completed, the connection of the personal computer 46 to the cellular telephone 12 is completed.

Subsequently, in cases where the personal computer 46 is to receive a list of the information stored in the storage part 17 of the cellular telephone 12, a transmission request of the list of information is transmitted from the personal computer 46 to the cellular telephone 12 via the gateway device 50 and communications device 32 of the network device 16 as shown in Fig. 10. Furthermore, the list of information is transmitted from the cellular telephone 12 to the personal computer 46 via the communications device 32 and gateway device 50 of the network device 16 in accordance with this transmission request for the list of information.

Furthermore, in cases where the personal computer 46 is to receive information that is stored in the storage part 17 of the cellular telephone 12, a transmission request for this information is transmitted from the personal computer 46 to the cellular telephone 12 via the gateway device 50 and communications device 32 of the network device 16 as shown in Fig. 11. Furthermore, information such as images, music, text or the like is transmitted from the cellular telephone 12 to the personal computer 46 via the communications device 32 and gateway device 50 of the network device 16 in accordance with this transmission request for information.

## Claims

1. A mobile communications terminal (12) comprising:
first storage means (17) for storing information and a list of said information; first receiving means (20) for receiving transmission requests that are transmitted from communications terminals (14) for said information and said list of said information stored in said first storage means (17); and
first transmitting means (22) for transmitting said information and said list of said information stored in said first storage means to said communications terminals in accordance with transmission requests for said information received by said first receiving means, **characterized in that** said first transmitting means (22) is adapted to perform a call connection again for re-initiating the transmission and the transmission of said information from said mobile communications terminal (12) to said communications terminals (14) is re-initiated in cases where the call between said mobile communications terminal and said communications terminals is cut off in a state in which the transmission of said information from said mobile communications terminal (12) to said communications terminals (14) is incomplete.

2. The mobile communications terminal (12) according to claim 1, wherein said mobile communications terminal (12) further comprises adding means (18) for adding attribute information regarding attributes of said information stored in said first storage means to said information.

3. The mobile communications terminal (12) according to claim 2, wherein said attribute information that is added by said adding means (18) is transmission permission information regarding permission to transmit said information, and on the basis of said transmission permission information, said first transmitting means transmit said information to said communications terminals (14) in cases where the transmission of said information is permitted, and do not transmit said information to said communications terminals in cases where the transmission of said information is not permitted.

4. The mobile communications terminal (12) according to claim 2, wherein said attribute information that is added by said adding means (18) is forwarding permission information regarding permission to forward said information from said communications terminals to other communications terminals, and on the basis of said forwarding permission information, said first transmitting means transmit said information to said communications terminals in a state of allowing the forwarding in cases where the forwarding of said information is permitted, and transmit said information to said communications terminals in a state of inhibiting the forwarding in cases where the forwarding of said information is not permitted.

5. The mobile communications terminal (12) according to claim 2, wherein said attribute information that is added by said adding means (18) is editing permission information regarding permission to edit said information in said communications terminals, and on the basis of said editing permission information, said first transmitting means transmit said information to said communications terminals in a state of allowing the editing in cases where the editing of said information is permitted, and transmit said information to said communications terminals in a state of inhibiting the editing in cases where the editing of said information is not permitted.

6. The mobile communications terminal (12) according to claim 2, wherein said attribute information that is added by said adding means (18) is copyright information regarding the copyright of said information, and said first transmitting means transmit said copyright information to said communications terminals.

7. The mobile communications terminal (12) according to claim 1, wherein said first storage means (17) is adapted to create directories on the basis of instructions from the user.

8. A mobile communication system comprising:
a mobile communication terminal (12) according to any one of claims 1-7; a communications terminal (14); and
a network device (16), wherein the network device (16) comprises:
second receiving means (36) for receiving transmission requests transmitted from said communications terminal (14) for information stored in the first storage means (17) of mobile communications terminal (12);
specifying means for specifying said mobile communications terminal (12) on the basis of transmission requests for said information and said list of said information received by said second receiving means (36);
second transmitting means (38) for transmitting transmission requests for said information and said list of said information to said mobile communications terminal (12) specified by said specifying means;
third receiving means (40) for receiving said information and said list of said information transmitted from said mobile communications terminal (12) in accordance with the transmission requests for said information transmitted by said second transmitting means (38); and
third transmitting means (42) for transmitting said information and said list of said information received by said third receiving means (40) to said communications terminal (14),
second storage means (44) for storing transmission requests for said information that are received by said second receiving means (36), wherein said second transmitting means (38) store said transmission requests for said information in said second storage means (44) in cases where a call between said mobile communications terminal (12) and said communications terminal (14) is cut off, and
read out said transmission requests for said information from said second storage means (44) and transmit to said mobile communications terminal (12) when it becomes possible to transmit said transmission requests for said information to said mobile communications terminal (12).

9. An information transmitting and receiving method comprising:
a first receiving step in which information and a list of said information are stored in first storage means (17) of a mobile communications terminals (12), and first receiving means (20) of said mobile communications terminal (12) receive a transmission request that is transmitted from a communications terminal (14) for said list of said information that is stored in said first storage means (17) a first transmitting step in which first transmitting means (22) of said mobile communications terminal (12) transmits said list of said information stored in said first storage means to said communications terminal (14) in accordance with the transmission requests for said list of said information that are received by said first receiving means (20);
a second receiving step of receiving the transmission request for said information stored in said first storage means (17) and transmitted from said communication terminal (14); and
a second transmission step in which said first transmitting means (22) of said mobile communication terminal (12) transmits said information stored in said first storage means (17) to said communication terminal (14) in accordance with the transmission request for said information which is received by said first receiving means (20); **characterized in that**
said second transmitting step performs a call connection again for re-initiating the transmission and the transmission of said information from said mobile communications terminal (12) to said communications terminal (14) is re-initiated in cases where the call between said mobile communications terminal (12) and said communications terminal (14) is cut off in a state in which the transmission of said information from said mobile communications terminal (12) to said communications terminal (14) is incomplete.

10. An information transmitting and receiving program comprising code means for executing all the steps of the method according to claim 9.

## Patentansprüche

1. Ein mobiles Kommunikationsendgerät (12) aufweisend:
erste Speichermittel (17) zum Speichern von Informationen und eine Liste der Informationen;
erste Empfangsmittel (20) zum Empfangen von Sendeanforderungen, die von Kommunikationsendgeräten (14) gesendet werden für die in den ersten Speichermitteln (17) gespeicherten Informationen und die Liste der Informationen, und
erste Sendemittel (22) zum Senden der in den ersten Speichermitteln gespeicherten Informationen und der Liste der Informationen, an die Kommunikationsendgeräte in Übereinstimmung mit durch das erste Empfangsmittel empfangenen Sendeanforderungen für die Informationen, **dadurch gekennzeichnet, dass** das erste Sendemittel (22) daran angepasst ist, erneut einen Rufaufbau durchzuführen, zum erneuten Anstoß der Sendung, und dass die Sendung der Informationen vom mobilen Kommunikationsendgerät (12) an die mobilen Kommunikationsendgeräte (14) erneut angestoßen wird in Fällen, in denen der Ruf zwischen dem mobilen Kommunikationsendgerät und den mobilen Kommunikationsendgeräten in einem Zustand unterbrochen wird, in welchem die Übertragung der Informationen von dem mobilen Kommunikationsendgerät (12) an die mobilen Kommunikationsendgeräte (14) unvollständig ist.

2. Das mobile Kommunikationsendgerät (12) nach Anspruch 1, worin das mobile Kommunikationsendgerät (12) ferner Hinzufügungsmittel (18) aufweist, zum Hinzufügen von Attributinformation betreffend Attribute der in den ersten Speichermitteln gespeicherten Informationen, zu den Informationen.

3. Das mobile Kommunikationsendgerät (12) nach Anspruch 2, worin die Attributinformation, welche durch die Hinzufügungsmittel (18) hinzugefügt wird, Sendeerlaubnisinformation ist betreffend eine Erlaubnis, die Informationen zu senden und auf der Basis der Sendeerlaubnisinformation das erste Sendemittel die Informationen an die Kommunikationsendgeräte (14) in Fällen überträgt, in denen das Senden der Informationen erlaubt ist und die Informationen in Fällen nicht an Kommunikationsendgeräte überträgt, in denen das Senden der Informationen nicht erlaubt ist.

4. Das mobile Kommunikationsendgerät (12) nach Anspruch 2, worin die Attributinformation, die durch die Hinzufügungsmittel (18) hinzugefügt wird, Weiterleitungserlaubnisinformation ist, betreffend eine Erlaubnis die Informationen von den Kommunikationsendgeräten an andere Kommunikationsendgeräte weiterzuleiten, und auf der Basis der Weiterleitungserlaubnisinformation das erste Sendemittel die Informationen an die Kommunikationsendgeräte sendet, in einem Zustand der Erlaubnis des Weiterleitens, in Fällen, in denen das Weiterleiten der Informationen erlaubt ist, und die Informationen an die Kommunikationsendgeräte in einem Zustand des Verhindems des Weiterleitens sendet, in Fällen, in denen das Weiterleiten der Informationen nicht erlaubt ist.

5. Das mobile Kommunikationsendgerät (12) nach Anspruch 2, worin die Attributinformation, die durch die Hinzufügungsmittel (18) hinzugefügt wird, Bearbeitungserlaubnisinformation ist, betreffend eine Erlaubnis, die Informationen in den Kommunikationsendgeräten aufzubereiten, und auf der Basis der Bearbeitungserlaubnisinformation das erste Sendemittel die Informationen an die Kommunikationsendgeräte sendet, in einem Zustand der Erlaubnis des Bearbeitens, in Fällen, in denen das Bearbeiten der Informationen erlaubt ist, und die Informationen an die Kommunikationsendgeräte in einem Zustand des Verhinderns des Bearbeitens sendet, in Fällen, in denen das Bearbeiten der Informationen nicht erlaubt ist.

6. Das mobile Kommunikationsendgerät (12) nach Anspruch 2, worin die Attributinformation, welche durch die Hinzufügungsmittel (18) hinzugefügt wird, Urheberrechtsschutzinformation ist, betreffend das Urheberrecht der Informationen und das erste Sendemittel die Urheberrechtsschutzinformation an die Kommunikationsendgeräte sendet.

7. Das mobile Kommunikationsendgerät (12) nach Anspruch 1, worin das erste Speichermittel (17) daran angepasst ist, Verzeichnisse auf der Basis von Befehlen des Anwenders zu erzeugen.

8. Ein mobiles Kommunikationssystem aufweisend:
ein mobiles Kommunikationsendgerät (12) nach irgendeinem der Ansprüche 1 bis 7; ein Kommunikationsendgerät (14); und eine Netzwerkvorrichtung (16), worin die Netzwerkvorrichtung (16) aufweist:
zweite Empfangsmittel (36) zum Empfangen von, von dem Kommunikationsendgerät (14) gesendeten Sendeanforderungen für Informationen, die in den ersten Speichermitteln (17) des mobilen Kommunikationsendgerätes (12) gespeichert sind;
Spezifikationsmittel zum Spezifizieren des mobilen Kommunikationsendgerätes (12) auf der Basis von Sendeanforderungen für die Informationen und die Liste der Informationen, die durch die zweiten Empfangsmittel (36) empfangen werden;
zweite Sendemittel (38) zum Senden von Sendeanforderungen für die Informationen und die Liste der Informationen an das mobile Kommunikationsendgerät (12), das durch die Spezifikationsmittel spezifiziert ist;
dritte Empfangsmittel (40) zum Empfangen der Informationen und der Liste der Informationen, die vom mobilen Kommunikationsendgerät (12) in Übereinstimmung mit den Sendeanforderungen für die Informationen, die durch das zweite Sendemittel (38) gesendet wurden, gesendet werden und
dritte Sendemittel (42) zum Senden der Informationen und der Liste der Informationen, welche durch die dritten Empfangsmittel (40) empfangen wurden an das mobile Kommunikationsendgerät (14),
zweite Speichermittel (44) zum Speichern von Sendeanforderungen für die Informationen, die durch das zweite Empfangsmittel (36) empfangen werden, worin das zweite Sendemittel (38) die Sendeanforderungen für die Informationen in dem zweiten Speichermittel (44) in Fällen speichert, in welchen ein Ruf zwischen dem mobilen Kommunikationsendgerät (12) und dem mobilen Kommunikationsendgerät (14) unterbrochen wird und die Sendeanforderungen für die Informationen aus dem zweiten Speichermittel (44) ausliest und an das mobile Kommunikationsendgerät (12) sendet, wenn es möglich wird, die Sendeanforderungen für die Informationen an das mobile Kommunikationsendgerät (12) zu senden.

9. Ein Informationssende- und -empfangsverfahren aufweisend:
einen ersten Empfangsschritt, in welchem Informationen und eine Liste der Informationen in ersten Speichermitteln (17) eines mobilen Kommunikationsendgerätes (12) gespeichert werden und erste Empfangsmittel (20) des mobilen Kommunikationsendgerätes (12) eine Sendeanforderung empfangen, die von einem mobilen Kommunikationsendgerät (14) gesendet wird für die Liste der Informationen, die in den ersten Speichermitteln (17) gespeichert ist; einen ersten Sendeschritt, in welchem ein erstes Sendemittel (22) des mobilen Kommunikationsendgerätes (12) die Liste der Informationen, die in den ersten Speichermitteln gespeichert ist, an das Kommunikationsendgerät (14) in Übereinstimmung mit den Sendeanforderungen für die Liste der Informationen, die durch das erste Empfangsmittel (20) empfangen werden, sendet;
einen zweiten Empfangsschritt des Empfangens der Sendeanforderung für die Informationen, die in den ersten Speichermitteln (17) gespeichert sind und von dem Kommunikationsendgerät (14) gesendet werden; und
einen zweiten Sendeschritt, in welchem das erste Sendemittel (22) des mobilen Kommunikationsendgerätes (12) die in den ersten Speichermitteln (17) gespeicherten Informationen an das Kommunikationsendgerät (14) in Übereinstimmung mit der Sendeanforderung für die Information sendet, welche durch das erste Empfangsmittel (20) empfangen wird, **dadurch gekennzeichnet, dass** der zweite Sendeschritt wiederum einen Rufaufbau durchführt, zum erneuten Anstoßen des Sendens und dass das Senden der Informationen von dem mobilen Kommunikationsendgerät (12) an das mobile Kommunikationsendgerät (14) erneut angestoßen wird, in Fällen, in denen der Ruf zwischen dem mobilen Kommunikationsendgerät (12) und dem mobilen Kommunikationsendgerät (14) in einem Zustand unterbrochen wird, in welchem das Senden der Informationen von dem mobilen Kommunikationsendgerät (12) an das mobile Kommunikationsendgerät (14) unvollständig ist.

10. Ein Informationssende- und -empfangsprogramm, das Codemittel aufweist zum Ausführen all der Schritte des Verfahrens nach Anspruch 9.

## Revendications

1. Station mobile de communications (12) comprenant :
des premiers moyens de stockage (17) pour stocker des informations et une liste desdites informations ;
des premiers moyens de réception (20) pour recevoir des requêtes de transmission qui sont transmises à partir de stations de communications (14) concernant lesdites informations et ladite liste desdites informations stockées dans lesdits premiers moyens de stockage (17) ; et
des premiers moyens de transmission (22) pour transmettre lesdites informations et ladite liste desdites informations stockées dans lesdits premiers moyens de stockage auxdites stations de communications en conformité avec les requêtes de transmission pour lesdites informations reçues par lesdits premiers moyens de réception, **caractérisée en ce que** lesdits premiers moyens de transmission (22) sont adaptés pour exécuter une connexion d'appel pour réinitialiser de nouveau la transmission et la transmission desdites informations à partir de ladite station de communications mobile (12) vers lesdites stations de communications (14) est réinitialisée dans les cas où l'appel entre ladite station de communications mobile et lesdites stations de communication est coupé dans un état dans lequel la transmission desdites informations provenant de ladite station de communications mobile (12) auxdites stations de communications (14) est incomplète.

2. Station mobile de communications (12) selon la revendication 1, dans laquelle ladite station mobile de communications (12) comprend, de plus, des moyens d'addition (18) servant à ajouter des informations d'attribut concernant des attributs desdites informations stockées dans lesdits premiers moyens de stockage auxdites informations.

3. Station mobile de communications (12) selon la revendication 2, dans laquelle lesdites informations d'attributs qui sont ajoutées par lesdits moyens d'addition (18) sont des informations de droit de transmission concernant un droit de transmettre lesdites informations, et sur la base desdites informations de droit de transmission, lesdits premiers moyens de transmission transmettent lesdites informations auxdites stations de communications (14) dans les cas où la transmission desdites informations sont autorisées et ne transmettent pas lesdites informations auxdites stations de communications dans les cas où la transmission desdites informations ne sont pas autorisées.

4. Station mobile de communications (12) selon la revendication 2, dans laquelle lesdites informations d'attributs qui sont ajoutées par lesdits moyens d'addition (18) sont des informations de permission de droit d'acheminement concernant un droit d'acheminement desdites informations à partir desdites stations de communications vers d'autres stations de communications, et sur la base desdites informations de droit d'acheminement, lesdits premiers moyens de transmission transmettent lesdites informations auxdites stations de communications dans un état d'autorisation de l'acheminement dans les cas où l'acheminement desdites informations est autorisé, et transmettent lesdites informations auxdites stations de communications dans un état d'interdiction de l'acheminement dans les cas où l'acheminement desdites informations n'est pas autorisé.

5. Station mobile de communications (12) selon la revendication 2, dans laquelle lesdites informations d'attributs qui sont ajoutées par lesdits moyens d'addition (18) sont des informations de droit d'édition concernant un droit d'éditer lesdites informations en que stations et sur la base desdites informations de droit d'éditer, lesdits premiers moyens de transmission transmettent lesdites informations auxdites stations de communications dans un état d'autorisation de l'édition dans les cas où l'édition desdites informations est autorisée, et transmettent lesdites informations auxdites stations de communications dans un état d'interdiction de l'édition dans les cas où l'édition desdites informations n'est pas autorisée.

6. Station mobile de communications (12) selon la revendication 2, dans laquelle lesdites informations d'attributs qui sont ajoutées par lesdits moyens d'addition (18) sont des informations de copyright concernant le copyright desdites informations, et lesdits premiers moyens de transmission transmettent lesdites informations de copyright auxdites stations de communications.

7. Station mobile de communications (12) selon la revendication 1, dans laquelle lesdits premiers moyens de stockage (17) sont adaptés pour créer des répertoires sur la base des instructions provenant de l'utilisateur.

8. Système mobile de communications comprenant :
une station mobile de communications (12) selon l'une quelconque des revendications 1 à 7 ; une station de communications (14) et
un dispositif de réseau (16), dans lequel le dispositif de réseau (16) comprend :
des seconds moyens de réception (36) pour recevoir des requêtes de transmission transmises à partir des dites stations de communications (14) pour des informations stockées dans les premiers moyens de stockage (17) d'une station mobile de communications (12);
des moyens de spécification pour spécifier ladite station mobile de communication (12) sur la base des requêtes de transmission concernant lesdites informations et ladite liste desdites informations reçues par lesdits seconds moyens de réception (36) ;
des seconds moyens de transmission (38) pour transmettre des requêtes de transmission concernant lesdites informations et ladite liste desdites informations à ladite stations mobile de communications (12) spécifiée par lesdits moyens de spécification ;
des troisièmes moyens de réception (40) pour recevoir lesdites informations et ladite liste desdites informations transmises à partir de ladite station mobile de communication (12) en conformité avec les requêtes de transmission concernant lesdites informations transmises par lesdits seconds moyens de transmission (38) ; et
des troisièmes moyens de transmission (42) pour transmettre lesdites informations et ladite liste desdites informations reçues par lesdits troisièmes moyens de réception(40) auxdites stations de communications (14),
des seconds moyens de stockage (44) pour stocker des requêtes de transmission concernant lesdites informations qui sont reçues par lesdits seconds moyens de réception (36) dans lesquels lesdits seconds moyens de transmission (38) stockent lesdites requêtes de transmission concernant lesdites informations dans lesdits seconds moyens de stockage (44) dans les cas où un appel entre ladite station mobile de communications (12) et ladite station de communications (14) est coupé, et lit lesdites requêtes de transmission concernant lesdites informations à partir desdits seconds moyens de stockage (44) et les transmet à ladite station mobile de communications (12) lorsqu'il devient possible de transmettre lesdites requêtes de transmission concernant lesdites informations à ladite station mobile de communications (12).

9. Procédé de transmission et de réception d'informations comprenant :
une première étape de réception dans laquelle des informations et une liste desdites informations sont stockées dans des premiers moyens de stockage (17) d'une station mobile de communications (12), et
dans laquelle des premiers moyens de réception (20) de ladite station mobile de communications (12) reçoivent une requête de transmission qui est transmise à partir d'une station de communications (14) pour ladite liste desdites informations qui est stockée dans lesdits premiers moyens de stockage (17) une première étape de transmission dans laquelle des premiers moyens de transmission (22) de ladite station mobile de communication (12) transmettent ladite liste desdites informations stockées dans lesdits premiers moyens de stockage à ladite station de communications (14) en conformité avec les requêtes de transmission concernant ladite liste desdites informations qui sont reçues par lesdits premiers moyens de réception (20),
une seconde étape de réception de la requête de transmission concernant lesdites informations stockées dans lesdits premiers moyens de stockage (17) et transmise à partir de ladite station de communication (14) ; et
une seconde étape de transmission dans laquelle lesdits premiers moyens de transmission (22) de ladite station mobile de communications (12) transmettent lesdites informations stockées dans lesdits premiers moyens de stockage (17) à ladite station de communications (14) en conformité avec la requête de transmission concernant lesdites informations qui sont reçues par lesdits premiers moyens de réception (20) ;
**caractérisé en ce que** ladite seconde étape de transmission exécute une connexion d'appel de nouveau pour réinitialiser la transmission et la transmission des informations à partir de ladite station mobile desdites communications (12) à ladite station de communications (14) est réinitialisée dans les cas où l'appel entre ladite station mobile de communications (12) et ladite station de communications (14) est coupé dans un état dans lequel la transmission desdites informations provenant de ladite station mobile de communications (12) à ladite station de communications (14) est inachevée.

10. Programme de transmission et de réception d'informations comprenant des moyens de codage pour exécuter toutes les étapes du procédé selon la revendication 9.
